Europäisches Patentamt

European Patent Office

Office européen des brevets

(11) Publication number: 0 404 955 A1

# EUROPEAN PATENT APPLICATION
## published in accordance with Art. 158(3) EPC

(21) Application number: 89909049.2

(22) Date of filing: 08.08.89

(86) International application number:
PCT/JP89/00807

(87) International publication number:
WO 90/01745 (22.02.90 90/05)

(51) Int. Cl.5: G06F 15/60, G06F 3/14,
G09G 1/00, G05B 19/405

(30) Priority: 12.08.88 JP 201170/88

(43) Date of publication of application:
02.01.91 Bulletin 91/01

(84) Designated Contracting States:
DE IT

(71) Applicant: FANUC LTD
3580, Shibokusa Aza-Komanba Oshinomura
Minamitsuru-gun Yamanashi 401-05(JP)

(72) Inventor: SEKI, Masaki
3-15-2-406, Takaido-nishi
Suginami-ku Tokyo 168(JP)
Inventor: TAKEGAHARA, Takashi
256-2, Nishiterakata-cho
Hachioji-shi Tokyo 192-01(JP)

(74) Representative: Billington, Lawrence Emlyn et
al
Haseltine Lake & Co Hazlitt House 28,
Southampton Buildings Chancery Laneane
London WC2A 1AT(GB)

(54) DRAWING METHOD ON AN ENLARGED SCALE.

(57) An enlarged-scale drawing method which displays on an enlarged scale a shape (IMG') that is drawn on the display screen. A magnification Ks for drawing on an enlarged scale is set under the condition where the shape (IMG') is drawn on the display screen (DFS) at a magnification K, and a frame (FRM) that indicates a display range maintaining the magnification Ks is displayed on the screen being superposed on the shape (IMG'). Then, the displayed frame (FRM) is moved relative to the shape that is drawn on the display screen, the range of shape to be displayed on an enlarged scale is specified by the frame, and a shape (IMG") enlarged from a portion of the shape in the frame at the magnification Ks is displayed on the display screen.

FIG.1(a)

FIG.1(b)

FIG.1(c)

DESCRIPTION

ENLARGING DISPLAY METHOD

## Technical Field

This invention relates to an enlarging display method and, more particularly, to an enlarging display method for displaying, in enlarged form, a shape being presented on a display screen.

## Background Art

Graphic display units are used everywhere as means for realizing CAD/CAM (computer aided design and manufacture). For example, such units are utilized effectively as means for instantaneously displaying tool paths, shapes such as machined profiles and the like in NC machine tools, etc., to check NC machining programs. Such graphic display units are so adapted that when shape data, scale and display origin on a display screen are set, the shape is displayed based on the set scale, display origin, etc.

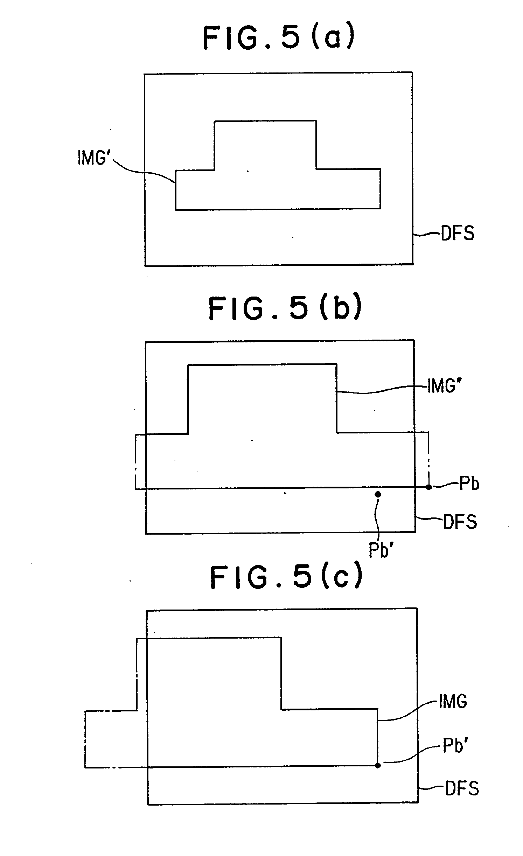

There are cases where it is desired to display, in a form enlarged at a prescribed magnification, a region that is part of a shape IMG' [Fig. 5(a)] appearing on the screen. In such cases, the practice heretofore has been to designate the desired magnification, display in a display portion DFS [Fig. 5(b)] of the display screen an enlarged shape IMG" obtained by enlarging processing in accordance with the designated magnification using shape data already stored, and thereafter move the position of the enlarged shape IMG" by shifting it vertically and horizontally (e.g., moving it from the position of a point Pb to the position of a point Pb') to obtain only the desired region of the enlarged shape IMG" [Fig. 5(c)].

With this conventional enlarging display method, however, it is not possible to visually judge, prior to making the enlargement, the extent of the enlargement that will be produced by the newly designated magnification (scale). Consequently, owing to too much or too little enlargement following enlargement processing, there are instances where the desired portion cannot be enlarged on the display screen at the desired magnification by a single operation. In such cases, the operator must re-perform the scale setting and the operation for shifting the shape to the desired position. Thus, operability is poor. In addition, processing for enlarging and moving the shape data must be re-executed whenever scale resetting and movement are performed. Such processing requires a large amount of time.

Accordingly, an object of the present invention is to provide an enlarging display method in which it is possible to visually judge, prior to making the enlargement, the extent of the enlargement that will be produced, as well as the portion of the shape to be enlarged, as a result of which a desired magnification and the portion of the shape to be enlarged can be set with ease, thereby improving operability and reducing processing time.

Disclosure of the Invention

The enlarging display method of the present invention includes, in a state in which a prescribed shape is displayed on a display screen, setting an enlargement magnification Ks, displaying on the display screen, in a form superimposed on the displayed shape, a frame which indicates a region capable of being displayed at the magnification Ks, moving the displayed frame on the display screen relative to the displayed shape, specifying, by the frame, a region of the displayed shape to be displayed in enlarged form, and thereafter displaying a portion of the shape within the frame on the display screen in enlarged form at the set magnification.

Brief Description of the Drawings

Fig. 1 is a schematic explanatory view of the present invention;

Fig. 2 is a block diagram of an apparatus for practicing the present invention;

Fig. 3 is a flowchart of processing according to the present invention;

Fig. 4 is a view for describing an enlarged display according to the present invention; and

Fig. 5 is a view for describing the conventional method.

Best Mode for Carrying Out the Invention

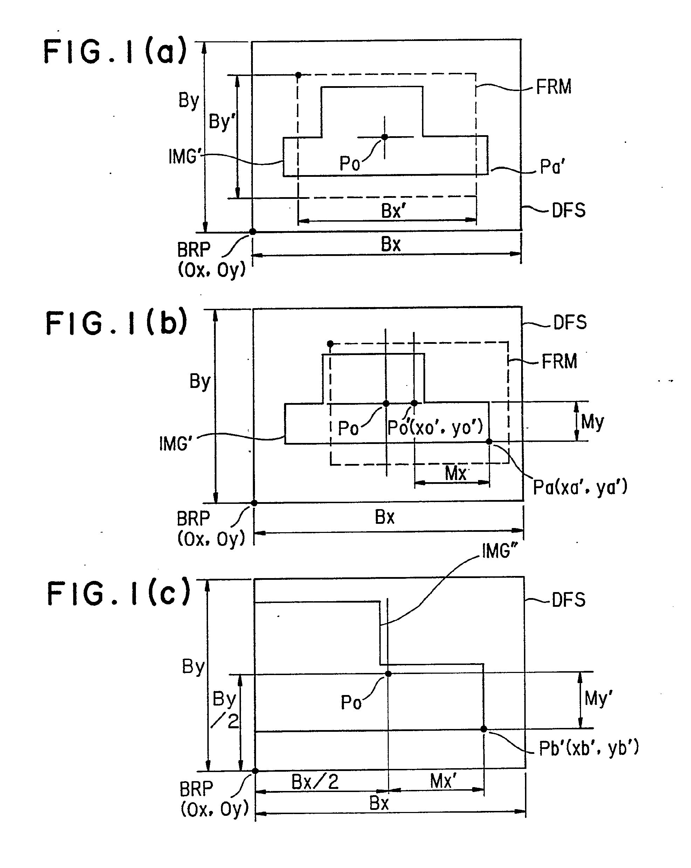

Fig. 1 shows an example of a CRT screen and is for describing the general features of the enlarging display method of the present invention. IMG' represents a displayed shape obtained by displaying a drawing figure IMG on a display section DFS of a display screen at a magnification K, IMG" denotes a shape similarly displayed at a magnification Ks (> K), FRM designates a frame which indicates a region capable of being displayed at the magnification Ks, and DFS represents the display section of the display screen.

With the shape IMG' being displayed at the magnification K, the magnification Ks for enlarging the display is set, and the frame FRM, which indicates the region capable of being displayed at the magnification Ks, is displayed at the center of the display section DFS in a form superimposed on the shape IMG' [see Fig. 1(a)]. Thereafter, the displayed frame FRM is moved [see Fig. 1(b)] to designate the region of the shape to be enlarged, and the shape IMG", which is obtained by enlarging the portion of the shape within the frame FRM at the set magnification Ks, is displayed in the display section DFS on the display screen [see Fig. 1(c)].

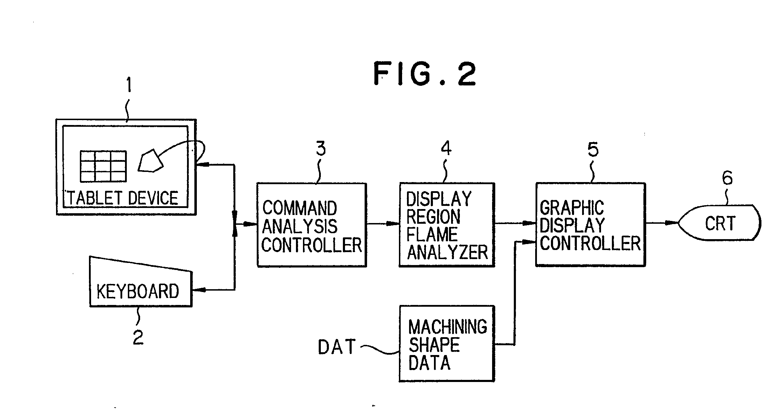

Fig. 2 is a block diagram of an apparatus for practicing the present invention.

Numeral 1 denotes a tablet device, 2 a keyboard, 3 a command analysis controller for analyzing commands entered from the tablet device 1, keyboard 2 or the like, 4 a display region frame analyzer, 5 a graphic display controller, 6 a display screen (CRT), and DAT shape data such as the dimensions of the drawing figure IMG.

The keyboard 2 is provided with arrow keys (e.g., "→", "←", "↑", "↓") for moving the shape displayed on the CRT 6, an execute key (e.g., an "NL" key), etc., as well as ordinary alphanumeric keys.

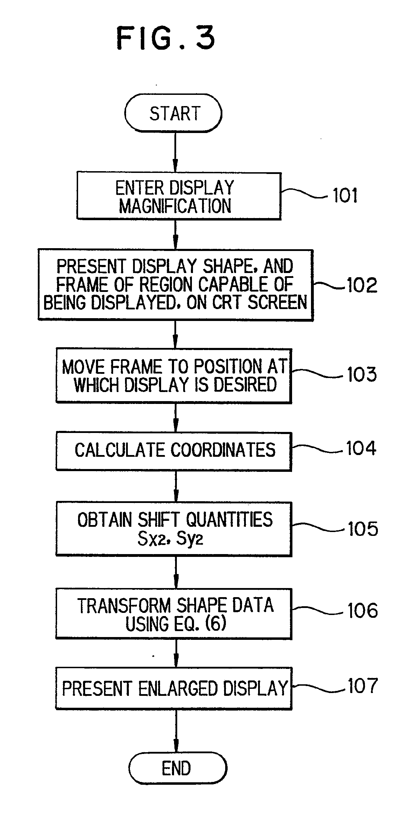

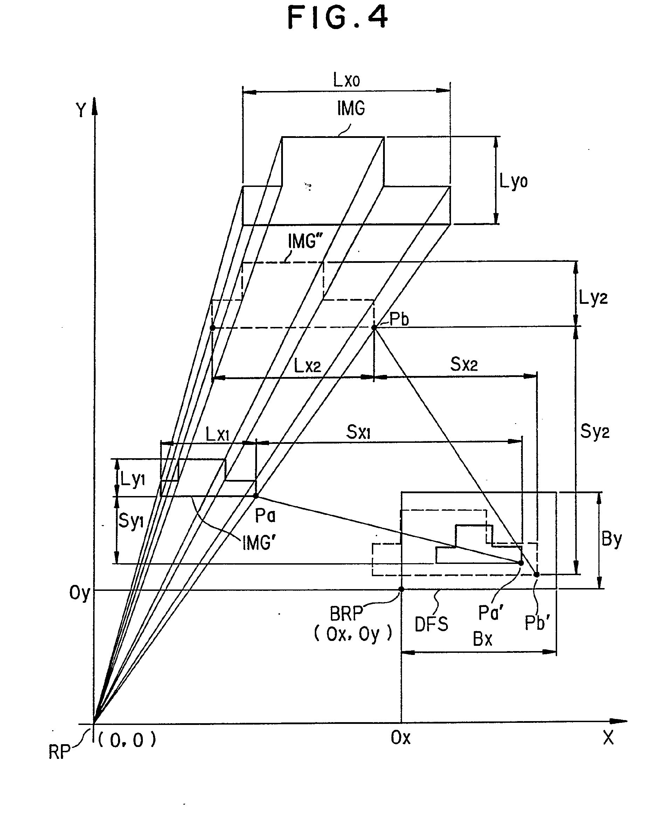

Fig. 3 is a flowchart of processing for the enlarging display method according to the present invention, and Fig. 4 is a view for describing an enlarged display according to the present invention. The enlarging display processing of the invention will now be described in accordance with the flowchart of Fig. 3.

When the shape data DAT, magnification K and a display starting point Pa are entered, the graphic display controller 5 generates the shape IMG' and displays it on the display section DFS of CRT 6 [see Fig. 1(a) and Fig. 4]. Specifically, the graphic display controller 5 displays the reduced figure IMG' on the display screen DFS by processing consisting of the following three steps: (i) obtaining the reduced shape IMG' which results when the drawing figure IMG (Fig. 4) is enlarged or reduced (reduced in the case of Fig. 4) at the predetermined magnification K based on the drawing origin RP; (ii) obtaining a horizontal shift quantity $Sx_1$ and a vertical shift quantity $Sy_1$, which are necessary for displaying the reduced shape IMG' on the display screen DFS, by designating a display starting point Pa'; and (iii) thereafter transforming X, Y coordinates $(x,y)$ of image information, which specifies the drawing figure IMG, in accordance with the equation

$$\begin{pmatrix} x' \\ y' \end{pmatrix} = \begin{bmatrix} K \cdot x + Sx_1 \\ K \cdot y + Sy_1 \end{bmatrix} \qquad (1)$$

and generating a graphic using $(x',y')$. In Fig. 4, BRP represents the coordinates $(0x,0y)$ of the display origin on the CRT screen, and Pa is a point on the reduced shape IMG'.

When the magnification Ks is entered using the keyboard 2 to effect enlargement at the desired magnification solely with regard to the region which is part of the displayed shape IMG' (step 101), the command analysis controller 3 obtains the ratio S of the magnification K of the displayed shape IMG' to the designated magnification Ks in accordance with the following equation:

$$S = Ks/K \qquad (2)$$

The ratio S is a numeric value of 1 or more and means that the displayed shape IMG' is to be displayed upon being enlarged S times. Accordingly, it can be so arranged that this ratio (relative magnification) S is entered from the keyboard 2 instead of the magnification Ks.

Next, the frame FRM [the dashed line in Fig. 1(a)] is displayed at the center of the display screen BFS in a form superimposed on the displayed shape IMG' (step 102). The frame FRM has a horizontal dimension Bx' and a vertical dimension By' obtained by performing the calculations

$$Bx' = Bx/S \qquad (3a)$$

$$By' = By/S \qquad (3b)$$

using the horizontal dimension Bx and vertical dimension By of the display screen BFS. The arrangement is such that when the arrow keys (keys "→", "←", "↑", "↓") provided on the keyboard 2 are pressed, the frame FRM will move in the directions designated by these keys. By thus moving the frame FRM, the operator can ascertain which regions will and will not be visible after changing the magnification.

The operator moves the displayed frame FRM by pressing the arrow keys, thereby specifying the portion of the displayed shape IMG' that is to be enlarged. For example, if, by moving the center point of the frame FRM from $P_0$ to $P_0'$ [Fig. 1(b)] using the "→" key, the interior of the frame FRM contains the desired portion of the shape at the desired size, then the operator decides that the magnification Ks is appropriate and presses the execute key (NL key) (step 103).

In response to pressing of the NL key, the display region frame analyzer 4 detects the amount of movement of the frame FRM, obtains the coordinates $(x_0', y_0')$ of the center point $P_0'$ of frame FRM, obtains the X-axis distance Mx and Y-axis distance My between points $P_0'$ and Pa' using these coordinates and the coordinates $(xa', ya')$ of the display starting point Pa' of the shape IMG', and then uses the X-axis distance Mx and Y-axis distance My to obtain the coordinates of the display starting point Pb' of the shape IMG" to be enlarged at the magnification Ks (the relative magnification S).

More specifically,

$$Mx' = Mx \cdot S \qquad (4a)$$

$$Mx' = Mx \cdot S \qquad (4b)$$

are obtained using the relative magnification S, and the coordinates (xb',yb') of the display starting point Pb' of the shape IMG" are found (step 104) in the display coordinate system (the origin of which is BRP) in accordance with the equations

$$xb' = (Bx/2) + Mx' \qquad (5a)$$

$$yb' = (By/2) - My' \qquad (5b)$$

When the magnification Ks and the coordinates (xb',yb') of the display starting point Pb' of the shape IMG" have been specified, the graphic display controller 5, through a method similar to that used to display the shape IMG' on the display screen DFS, obtains the reduced shape IMG" which results when the displayed shape IMG (Fig. 4) is enlarged or reduced (reduced in the case of Fig. 4) at the designated magnification Ks based on the origin RP, then obtains a horizontal shift quantity $Sx_2$ and a vertical shift quantity $Sy_2$, which are necessary for displaying the reduced shape IMG" on the display screen DFS in accordance with the coordinates of the display starting point Pb' (step 105), thereafter transforms X, Y coordinates (x,y) of image information, which specifies the drawing figure IMG, in accordance with the equation

$$\begin{pmatrix} x'' \\ y'' \end{pmatrix} = \begin{bmatrix} Ks \cdot x + Sx_2 \\ Ks \cdot y + Sy_2 \end{bmatrix} \qquad (6)$$

(step) 106, generates a graphic using $(x'',y'')$, displays the reduced graphic IMG'' on the display screen DFS [Fig. 1(c) and step 105] and terminates enlargement processing (step 107).

Thus, in accordance with the present invention, it is arranged to set an enlargement magnification, display, in a form superimposed on a displayed shape, a frame which indicates a region capable of being displayed at the magnification, moving the displayed frame on the display screen to specify a region of the shape to be displayed in enlarged form, and thereafter display the portion of the shape within the frame on the display screen at the set magnification. As a result, it is possible to visually judge, prior to the enlargement processing of the shape data, the extent of the enlargement that will be produced, as well as the portion of the shape to be enlarged. Accordingly, a desired magnification and the portion of the shape to be enlarged can be set with ease, thereby improving operability and reducing processing time.

CLAIMS:

1. An enlarging display method for presenting an enlarged display of a shape displayed on a display screen at a magnification K, characterized by comprising:

a first step of setting a display magnification Ks;

a second step of displaying on the display screen, in a form superimposed on said displayed shape, a frame which indicates a region capable of being displayed at the magnification Ks;

a third step of moving the displayed frame on the display screen relative to the displayed shape to specify a region of the displayed shape to be displayed in enlarged form; and

a fourth step of displaying a portion of the shape within said frame on the display screen at said set magnification.

2. An enlarging display method according to claim 1, characterized in that said second step has steps of:

calculating a ratio S of the set magnification Ks to the magnification K of the displayed shape;

calculating a horizontal dimension Bx' and a vertical dimension By' by dividing a horizontal dimension Bx and a vertical dimension By of the display screen by said ratio S; and

displaying the frame, which has said horizontal dimension Bx' and said vertical dimension By', at the center of the display screen.

3. An enlarging display method according to claim 2, characterized in that said fourth step has steps of:

calculating X- and Y-axis distances Mx, My from a center point of the frame, after movement thereof, to a reference point of the displayed shape;

calculating coordinates of said reference point in the display coordinate system, in a case where the shape is displayed in enlarged form, using said distances Mx, My along the respective axes, said ratio S and the horizontal dimension Bx and vertical dimension By of the display screen;

calculating shift quantities Sx, Sy along respective axes from a reference point of a shape, which is obtained by magnifying a drawing figure by Ks using an origin of the drawing as a reference, to the reference point in a case where the shape is displayed in enlarged form on the display screen;

transforming drawing figure data into data in the display coordinate system of the display screen using the magnification Ks and shift quantities Sx, Sy; and

displaying, in enlarged form, the portion of the shape within the region designated by the frame using the shape data obtained by the transformation.

FIG.1(a)

FIG.1(b)

FIG.1(c)

# FIG.2

EP 0 404 955 A1

# FIG. 3

```
        ( START )
            │
            ▼
  ┌─────────────────┐
  │  ENTER DISPLAY  │────── 101
  │  MAGNIFICATION  │
  └─────────────────┘
            │
            ▼
  ┌──────────────────────────┐
  │ PRESENT DISPLAY SHAPE, AND│
  │ FRAME OF REGION CAPABLE OF│──── 102
  │BEING DISPLAYED, ON CRT SCREEN│
  └──────────────────────────┘
            │
            ▼
  ┌─────────────────────┐
  │MOVE FRAME TO POSITION AT│──── 103
  │ WHICH DISPLAY IS DESIRED │
  └─────────────────────┘
            │
            ▼
  ┌─────────────────────┐
  │ CALCULATE COORDINATES│──── 104
  └─────────────────────┘
            │
            ▼
  ┌─────────────────────┐
  │ OBTAIN SHIFT QUANTITIES│──── 105
  │      Sx2, Sy2         │
  └─────────────────────┘
            │
            ▼
  ┌─────────────────────┐
  │ TRANSFORM SHAPE DATA │──── 106
  │    USING EQ. (6)     │
  └─────────────────────┘
            │
            ▼
  ┌─────────────────────┐
  │PRESENT ENLARGED DISPLAY│──── 107
  └─────────────────────┘
            │
            ▼
         ( END )
```

# FIG.4

# FIG. 5 (a)

IMG' — ...... DFS

# FIG. 5 (b)

IMG'

Pb

DFS

Pb'

# FIG. 5 (c)

IMG

Pb'

DFS

# INTERNATIONAL SEARCH REPORT

International Application No  PCT/JP89/00807

## I. CLASSIFICATION OF SUBJECT MATTER (if several classification symbols apply, indicate all) 6

According to International Patent Classification (IPC) or to both National Classification and IPC

Int. Cl$^4$   G06F15/60, G06F3/14, G09G1/00, G05B19/405

## II. FIELDS SEARCHED

| Minimum Documentation Searched 7 | |
|---|---|
| Classification System | Classification Symbols |
| IPC | G06F15/60, G06F3/14, G09G1/00 |

Documentation Searched other than Minimum Documentation
to the Extent that such Documents are Included in the Fields Searched 8

| | |
|---|---|
| Jitsuyo Shinan Koho | 1926 – 1989 |
| Kokai Jitsuyo Shinan Koho | 1971 – 1989 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| X | JP, A, 60-257493 (Okuma Machinery Works, Ltd.) 19 December 1985 (19. 12. 85) Figs. 4 to 5 (Family: none) | 1 – 3 |
| X | JP, A, 54-64932 (Toshiba Corp.) 25 May 1979 (25. 05. 79) Figs. 2 to 3 (Family: none) | 1 – 3 |
| X | JP, A, 57-78086 (Toshiba Corp.) 15 May 1982 (15. 05. 82) Figs. 11 to 13 & US, A, 4468755 & EP, A1, 51294 & DE, C3, 3175423 | 1 – 3 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| October 6, 1989 (06. 10. 89) | October 23, 1989 (23. 10. 89) |
| International Searching Authority | Signature of Authorized Officer |
| Japanese Patent Office | |

Form PCT ISA-210 (second sheet) (January 1985)